# EUROPÄISCHE PATENTSCHRIFT

(11) **EP 2 553 766 B1**
(45) Veröffentlichungstag und Bekanntmachung des Hinweises auf die Patenterteilung: **15.08.2018**
(21) Anmeldenummer: 11709728.7
(22) Anmeldetag: 23.03.2011
(51) Int. Cl.: H01R 4/18, H01R 4/20, H01R 4/50

(54) **VERFAHREN ZUR KABELKONFEKTIONIERUNG SOWIE KONFEKTIONIERTES KABEL**
METHOD FOR PREFABRICATING CABLES AND PREFABRICATED CABLE
PROCÉDÉ DE CONFECTION DE CÂBLE ET CÂBLE AINSI CONFECTIONNÉ

(30) Priorität: 01.04.2010 DE 102010003599
(43) Veröffentlichungstag der Anmeldung: 06.02.2013
(73) Patentinhaber: Lisa Dräxlmaier GmbH, 84137 Vilsbiburg (DE)
(72) Erfinder: LEHMANN, Lutz, 84137 Vilsbiburg (DE)
(86) Internationale Anmeldenummer: PCT/EP2011/054443
(87) Internationale Veröffentlichungsnummer: WO 2011/120854

(56) Entgegenhaltungen:
- WO-A1-2008/104668
- GB-A- 2 109 173
- US-A- 5 231 752
- US-A1- 2010 144 217

## Beschreibung

Die vorliegende Erfindung betrifft die Kabelkonfektionierung. Insbesondere betrifft die vorliegende Erfindung die Kontaktierung von Kabeln umfassend Leichtmetalllitzen, wie beispielsweise Aluminiumlitzen. Die Erfindung ist aber auch auf andere Litzenmaterialien, wie beispielsweise Magnesium- und Kupferlitzen oder auf Litzen aus Legierungen eines oder mehrerer der zuvor genannten, oder anderer geeigneter Materialen übertragbar. Derartige Kabel werden vor allem im Kraftfahrzeugbau verwendet, um elektrische Verbraucher mit elektrischer Energie zu versorgen. Ebenso werden derartige Kabel für die Erdung von elektrischen Systemen verwendet. Neben dem Verfahren zur Kabelkonfektionierung betrifft die vorliegende Erfindung auch ein konfektioniertes Kabel.

Darüber hinaus offenbart die GB-A-2 109 173 ein Verfahren zum Kabelkonfektionieren, bei dem ein Stift mit einem Kontaktteil zwischen die Einzeldrähte eines Litzenleiters eingeführt wird. Im Anschluss wird eine Hülse mit dem Litzenleiter und dem Kontaktteil vercrimpt. Dabei wird der Litzenleiter nicht abisoliert, so dass die Einzeldrähte stets isoliert sind. Zur elektrischen Kontaktierung dient der mit dem Kontaktteil verbundene Stift und die elektrische Verbindung zwischen Kontaktteil und Hülse.

Schließlich beschreibt die US 5,231,752 B ein Verfahren zum Abschließen eines Spannseils, wobei zunächst ein Stöpsel mit seinem verjüngten Ende zwischen Einzeldrähte des Seils eingeführt wird und anschließen der Stöpsel mit dem Seilende in einer Hülse formschlüssig verankert wird, wozu die Hülse an dem Ende, an dem das Seil die Hülse verlässt, vercrimpt wird, um den Innendurchmesser zu reduzieren.

Vor allem im Kraftfahrzeugbau besteht seit längerem der Wunsch, aus Gründen der Gewichtsersparnis sowie der Substitution teuerer Metalle mit kostengünstigeren Alternativen, elektrische Kabel aus Leichtmetall wie beispielsweise Magnesium oder Aluminium sowie deren Legierungen, zu fertigen. Bei der elektrischen Kontaktierung dieser Kabel mit einem Kontaktelement, die insbesondere in Kraftfahrzeugen über einen langen Zeitraum von vielen Jahren einer dynamischen Belastung unterworfen sind, treten jedoch insbesondere aufgrund der Kaltfließneigung des Materials, d. h. der Neigung von Leichtmetallen, wie Aluminium und Magnesium, mechanische Spannungen im Gefüge auch bei niedrigen Temperaturen abzubauen sowie aufgrund einer vor allem bei Aluminiumlegierungen auf den Oberflächen der Aluminiumlegierung vorliegenden Oxidschicht und schließlich aufgrund der Gefahr elektrochemischer Korrosion im Verbindungsbereich der Leichtmetalllitzen mit den Kontaktelementen in Anwesenheit von Elektrolyten Probleme hinsichtlich der Aufrechterhaltung der Kontaktierung auf. Es besteht somit seit langem das Bedürfnis, eine dauerhaft beständige Kontaktierung von Leichtmetalllitzen mit Kontaktelementen auch unter den gegebenen Umständen bereitzustellen.

Um diese Problematik zu lösen, schlägt die DE 10 2008 031 588 A1 vor, Leichtmetalllitzen über ein Ultraschallschweißverfahren mit einem Kontaktelement zu verbinden, wobei zunächst eine Hülse mit den frei liegenden Enden der Leichtmetalllitze mittels des Ultraschallschweißverfahrens kalt verschweißt wird. Diese Hülse dient anschließend der Kontaktierung mit dem Kontaktelement. Der Ultraschallschweißvorgang beansprucht zwischen 500 und 1.500 ms. Alternativ bekannte Weich- oder Hartlötvorgänge beanspruchen sogar mehrere Sekunden.

Ein alternatives Verfahren ist aus der dem Oberbegriff von Anspruch 1 bildenden WO 2008/104668 A1 bekannt. Dieses Verfahren nutzt ein Magnetimpulsschweißverfahren mittels dem die Hülse eines Kabelschuhs als Kontaktelement mit der frei liegenden Litze eines Kabels kalt verschweißt wird. Dabei wird die Hülse analog zum bekannten mechanischen Vercrimpen bzw. Verstemmen über das Magnetimpulsschweißverfahren von außen extrem beschleunigt auf die Litze gedrückt, um den Kontakt mit dieser herzustellen. Dieses Verfahren hat den Nachteil, dass die Wirkung des Magnetimpulses zum Zentrum der Litze hin nachlässt. Dadurch findet zwischen den mittig gelegenen Einzeldrähten keine Kaltverschweißung mehr statt, wodurch sowohl die Zuverlässigkeit der mechanischen Verbindung des Kontaktelements mit der Litze als auch die elektrische Leitfähigkeit der Verbindung verringert ist.

Der vorliegenden Erfindung liegt folglich die Aufgabe zu Grunde ein Verfahren zur Kabelkonfektionierung zu schaffen, das bei vergleichsweise geringer Prozessdauer eine im Vergleich zur WO 2008/104668 zuverlässigere Kontaktierung des Kontaktelements mit dem Litzenleiter des Kabels selbst bei Verwendung von Leichtmetalllitzen gewährleistet. Darüber hinaus betrifft die vorliegende Erfindung die Schaffung eines konfektionierten Kabels, das in kurzer Prozessdauer und damit kostengünstig herstellbar ist und eine zuverlässigere Kontaktierung von Kontaktelementen mit dem Litzenleiter des Kabels selbst bei Verwendung von Leichtmetall als Leiterwerkstoff ermöglicht.

Die obigen Aufgaben werden entsprechend durch ein Verfahren zur Kabelkonfektionierung mit den Merkmalen des Anspruchs 1 sowie ein konfektioniertes Kabel mit den Merkmalen des Anspruchs 4 gelöst. Vorteilhafte Weiterbildungen der vorliegenden Erfindung finden sich in den Unteransprüchen.

Der vorliegenden Erfindung liegt der Gedanke zur Grunde, durch Vorsehen wenigstens eines Widerlagers innerhalb des Litzenleiters dafür zu sorgen, dass sich der mechanische Impuls in optimaler Weise auch auf die inneren Einzeldrähte überträgt und damit eine Verringerung der Qualität der elektrischen und mechanischen Kontaktierung zum Zentrum hin zu vermeiden.

Dementsprechend schlägt die vorliegende Erfindung ein Verfahren zur Kabelkonfektionierung vor. Unter Kabelkonfektionierung ist in diesem Zusammenhang die Produktion von einbaufertigen Kabeln, Kabelbündeln oder gesamten Kabelbäumen mit samt Kontaktelementen zu verstehen. Als Kontaktelemente im Sinne der vorliegenden Erfindung sind Leiterquerschnitten notwendigen, sehr großen Anzahl an Einzeldrähten, werden aus Symmetriegründen auch mehrere Litzenleiter miteinander verseilt, die dadurch wiederum einen annähernd runden Querschnitt des Leiters ergeben. Bevorzugterweise sind die Drähte einer Litze aus einem Leichtmetall oder einer Leichtmetalllegierung, wie beispielsweise Magnesium oder Aluminium bzw. Legierungen davon gebildet. Besonders bevorzugt kommt hier Reinaluminium aufgrund seines Kosten- und Gewichtvorteils zum Einsatz. Das erfindungsgemäße Verfahren umfasst das Einbringen wenigstens eines bevorzugterweise länglichen, insbesondere stiftförmigen Widerlagers am Ende einer Ader in einer bevorzugten Ausführungsform ins Zentrum des frei liegenden Litzenleiters, d. h. zwischen die Einzeldrähte des Litzenleiters. Hierzu wird vorzugsweise in einem vorherigen Arbeitsschritt eine Teillänge des Kabels bzw. der Ader abisoliert, um die Litze frei zu legen. Das Einbringen des Widerlagers kann derart erfolgen, dass zunächst in einem separaten Schritt die Einzeldrähte des Litzenleiters auseinander geschoben werden, um einen entsprechenden Raum für das Widerlager zu schaffen. Dieser Vorgang kann beispielsweise durch Einführen eines sehr spitz gestalteten Dorns erfolgen, der zwischen die Einzeldrähte eingeführt und nach dem Auseinanderschieben des Litzenleiters wieder entfernt wird. Alternativ ist es auch denkbar, das Widerlager selbst mit seinem Vorderende spitz zu gestalten und direkt in den Litzenleiter einzubringen und während dieses Vorgangs auseinander zu drücken. D. h. das Widerlager selbst kann zum "Verformen" des Litzenleiters dienen. Es ist auch denkbar mehrere Elemente, z. B. Stifte, zwischen die frei liegenden Einzeldrähte des Litzenleiters einzubringen, die gemeinsam das Widerlager bilden. Auch sind mehrere Widerlager möglich, die sich z. B. gegeneinander abstützen und symmetrisch um die Mittelachse des Litzenleiters verteilt sein können. Ferner umfasst das erfindungsgemäße Verfahren das Positionieren einer Hülse um den Außenumfang des frei liegenden Litzenleiters. Dabei wird die Hülse vorzugsweise so positioniert, dass sie sowohl eine Teillänge des frei liegenden Litzenleiters als auch eine Teillänge des Widerlagers umgibt. D. h. zumindest in einem Teilbereich umgibt die Hülse zumindest den frei liegenden Litzenleiter und das Widerlager. Die Hülse kann vorab auf das Kabel aufgeführt sein, bevor das Widerlager in den Litzenleiter eingeführt wird. Es ist aber auch der umgekehrte Prozess oder ein gleichzeitiges Aufbringen von Hülse und Einbringen des Widerlagers denkbar. Letzteres, insbesondere wenn sowohl die Hülse als auch das Widerlager einstückig mit dem Kontaktelement ausgebildet (siehe später) sind. Die Hülse ist vorzugsweise eine Hülse mit geschlossenem, vorzugsweise kreisrundem Querschnitt. Schließlich umfasst das Verfahren der vorliegenden Erfindung das stoffschlüssige Verbinden (Verpressen) der Hülse mit den Litzendrähten sowie der Litzendrähte mit dem Widerlager, wodurch das Kontaktelement mit dem Litzenleiter elektrisch verbunden wird. Erfindungsgemäß kann das Kontaktelement mit der Hülse und/oder dem Widerlager verbunden, insbesondere einstückig ausgebildet sein. Diesbezüglich ist es denkbar, das Kontaktelement einstückig mit der Hülse zu gestalten oder einstückig mit dem Stift. Der Stift bzw. die Hülse sind in diesen Fällen entsprechend separate Elemente, die erst nach dem Verpressen eine Verbindung mit den anderen Elementen eingehen. Alternativ ist es auch denkbar, sowohl die Hülse als auch den Stift einstückig mit dem Kontaktelement auszubilden. Der Stift und/oder die Hülse können aus dem gleichen Werkstoff wie das Kontaktelement, d. h. z. B. aus Kupfer oder dessen Legierungen oder aus dem gleichen Material wie der Litzenleiter gebildet sein. Es ist jedoch auch denkbar, die Hülse und/oder den Stift aus einem anderen Material als das Kontaktelement und/oder den Litzenleiter auszugestalten. Neben den oben genannten Vorteilen bietet die vorliegende Erfindung den weiteren Vorteil, dass das Verfahren sowohl für die Kontaktierung von Kupferleitungen, d. h. Kupferlitzen, als auch Aluminiumleitungen, d.h. Aluminiumlitzen, verwendet werden kann. Dabei können dieselben Kontaktelementgeometrien und das gleiche Verfahren Kupfer oder dessen Legierungen oder aus dem gleichen Material wie der Litzenleiter gebildet sein. Es ist jedoch auch denkbar, die Hülse und/oder den Stift aus einem anderen Material als das Kontaktelement und/oder den Litzenleiter auszugestalten. Neben den oben genannten Vorteilen bietet die vorliegende Erfindung den weiteren Vorteil, dass das Verfahren sowohl für die Kontaktierung von Kupferleitungen, d. h. Kupferlitzen, als auch Aluminiumleitungen, d.h. Aluminiumlitzen, verwendet werden kann. Dabei können dieselben Kontaktelementgeometrien und das gleiche Verfahren verwendet werden. Lediglich kann es gegebenenfalls erforderlich sein, den Hülsendurchmesser auf den bei Aluminium im Vergleich zu Kupfer größeren Querschnitt anzupassen.

Gemäß der vorliegenden Erfindung erfolgt das stoffschlüssige Verbinden (Verpressen) durch einen Pressschweißvorgang. Hier kommt ein Ultraschallschweißvorgang in Frage, wobei die Hülse radial zentriert werden sollte. Aus diesem Grund und um die Prozessdauer zu reduzieren, ist ein Magnetimpulsschweißvorgang bevorzugt. Hinsichtlich des Magnetimpulsschweißverfahrens wird auf die eingangs genannte WO 2008/104668 A1 verwiesen. Die Verwendung des Magnetimpulsschweißverfahrens ermöglicht im Gegensatz zum Ultraschallschweißen ferner auch bei großen Leitungsquerschnitten über 60 mm² hohe mechanische Festigkeiten und gleichbleibend geringe Übergangswiderstände. Durch die Verwendung eines Pressschweißvorgangs wird die Innenseite der Hülse mit den in Kontakt stehenden Einzeldrähten kalt verschweißt. Ferner erfolgt eine Kaltverschweißung der miteinander in Kontakt stehenden Einzeldrähten untereinander sowie eine Kaltverschweißung der mit dem Widerlager in Kontakt stehenden Einzeldrähte mit dem Widerlager. Dadurch wird eine zuverlässige Verschweißung aller Drähte des Litzenleiters mit nahezu konstanter Qualität in Radialrichtung geschaffen.
zentrale Anordnung des Widerlagers relativ zum Litzenleiter gewährleistet werden kann. Bei Verwendung einer geraden Anzahl an Einzeldrähten ist es möglich, das Widerlager exakt zentral anzuordnen, wobei sich die Einzeldrähte gleichmäßig über den Umfang des Widerlagers verteilen. Bei einer ungeraden Anzahl an Einzeldrähten lässt sich die zentrale Anordnung nur im Wesentlichen erreichen, da ein Einzeldraht, der sonst zentral angeordnet ist, in einer Richtung radial ausweichen muss. Dies ist im Sinne der vorliegenden Anmeldung auch unter dem Begriff "zentral" zu verstehen und wird in den Ansprüchen durch die Begrifflichkeit "im Wesentlichen" gekennzeichnet.

Um das Einführen des Widerlagers oder des Stifts zum Formen eines Raums für das Widerlager zu erleichtern, ist es bevorzugt, bei verdrillten Litzen gegen den Drall abzuisolieren, wodurch sich die Verdrillung im zu kontaktierenden Bereich zumindest reduziert und damit das Einbringen des Widerlagers erleichtert wird.

Neben dem Verfahren zu Kabelkonfektionierung betrifft die vorliegende Erfindung auch ein konfektioniertes, ein- oder mehradriges, geschirmtes oder ungeschirmtes Kabel, das für eine oder mehrere Adern einen im Zentrum des Litzenleiters angeordneten Stift (das oben beschriebene Widerlager), eine auf den Außenumfang des Litzenleiters gepresste Hülse und ein Kontaktelement umfasst, das mit der Hülse und/oder dem Stift verbunden ist, vorzugsweise einstückig ausgebildet ist, sowie mit dem Litzenleiter in elektrischem Kontakt steht.

Bei dem Kabel handelt es sich vorzugsweise um einen Rundleiter mit einer Längsmittelachse und der Stift ist im Wesentlichen mit der Längsachse fluchtend ausgerichtet. Diesbezüglich wird auf das oben beschriebene zentrale Einbringen des Widerlagers Bezug genommen.

Ferner ist es bevorzugt, dass die Einzeldrähte des Litzenleiters aus Aluminium oder einer Aluminiumlegierung gebildet sind, wobei die Innenseite der Hülse mit den Einzeldrähten, die Einzeldrähte untereinander und die Einzeldrähte mit dem Stift kaltverschweißt sind, wie es oben erläutert wurde.

Weitere Merkmale und Vorteile der vorliegenden Erfindung, die alleinstehend oder in Kombination mit einem oder mehreren der obigen Merkmale umgesetzt werden können, finden sich in der folgenden Beschreibung einer bevorzugten Ausführungsform.

Diese erfolgt unter Bezugnahme auf die begleitenden Zeichnungen in denen
Figur 1 eine schematische Ansicht eines Kabels mit einem Kontaktelement gemäß der vorliegenden Erfindung vor dem Kontaktieren zeigt;
Figur 2 die Kombination aus Figur 1 in einem Zwischenschritt des erfindungsgemäßen Verfahrens zeigt; und
Figur 3 schematisch den Verbindungsvorgang der Kombination aus Figur 1 zeigt.

In der folgenden Beschreibung wird eine bevorzugte Ausführungsform erläutert. Es versteht sich jedoch, dass die vorliegende Erfindung auch auf andere Kabel mit Litzenleitern aus einem anderen Material sowie für andere Kontaktelemente eingesetzt werden kann. Auch ist es denkbar, dass das Kontaktelement nicht wie im Folgenden beschrieben mit dem Widerlager bzw. Stift einstückig verbunden ist, sondern es kann auch eine Verbindung alternativ mit der Hülse oder beiden Elementen vorgesehen werden. Auch ist es möglich die Verbindung nicht einstückig, sondern z. B. stoffschlüssig, kraft- und/oder formschlüssig, zu gestalten.

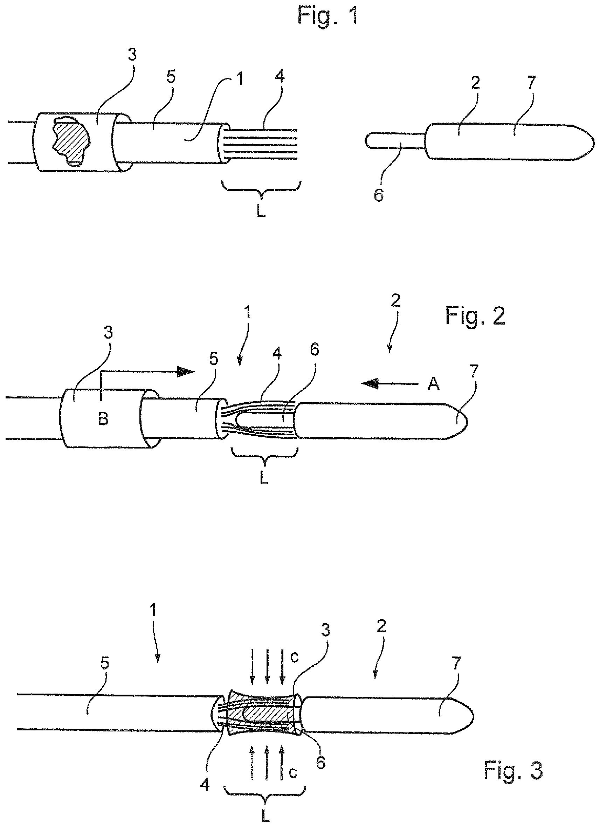

In Figur 1 ist ein Kabel 1 schematisch dargestellt. Bei dem Kabel 1 handelt es sich bei der dargestellten Ausführungsform um einen Rundleiter mit einem im Wesentlichen kreisrunden Querschnitt. Das Kabel 1 weist einen Litzenleiter 4 auf, der aus Einzeldrähten gebildet ist. Der Litzenleiter 4 kann anders als dargestellt verdrillt sein oder wie dargestellt aus parallel zueinander verlaufenden Drähten gebildet sein. Ferner umfasst das Kabel 1 eine Isolierung 5 im herkömmlichen Sinne, die den Litzenleiter 4 vollumfänglich umgibt und gegenüber äußeren Einflüssen isoliert, wie es dem Fachmann gut bekannt ist. An einem Ende des Kabel 1, das in Figur 1 dargestellt ist, ist das Kabel 1 abisoliert. D. h. der Litzenleiter 4 liegt über eine Teillänge L frei. In diesem Bereich L ist keine Isolierung 5 mehr vorhanden. Ist die Litze 4 verdrillt, erfolgt die Abisolierung entgegen des Dralls, um die Einzeldrähte zumindest in dem Endbereich L im Wesentlich parallel zueinander auszurichten, was das spätere Einführen des Stifts 6 (auch Widerlager) erleichtert, insbesondere dessen zentrales Einbringen.

Die Einzeldrähte des Litzenleiters 4 sind bei der dargestellten Ausführungsform aus Reinaluminium oder einer Aluminiumlegierung gebildet. Es können jedoch auch Kupferlitzen, Magnesiumlitzen oder Litzen aus Legierungen dieser Metalle zum Einsatz kommen.

Ferner ist in Figur 1 ein Kontaktelement 2 dargestellt. Das Kontaktelement 2 wird gebildet durch das Kontaktteil 7, z. B. einen Kabelschuh oder einen Rundstift (wie dargestellt). Es sind jedoch andere Kontaktteile, d. h. herkömmliche Kontakte und/oder Stecker als Kontaktteil 7 denkbar. Einstückig mit dem Kontaktteil 7 ist bei der dargestellten Ausführungsform ein Stift 6 ausgebildet. Bei dem Stift 6 handelt es sich um ein längliches Widerlager, dessen Querschnittdimension (insbesondere Durchmesser) deutlich geringer ist als die Querschnittsform des Litzenleiters 4 (insbesondere dessen Durchmesser). Gegebenenfalls kann der Querschnitt des Widerlagers 6 dem Querschnitt des Litzenleiters 4 entsprechen. Es sind aber größere oder kleinere Querschnitte denkbar.

Darüber hinaus ist in Figur 1 eine Hülse 3 dargestellt, die im Querschnitt eine geschlossene kreisrunde Form aufweist. Der Durchmesser ist dabei geringfügig größer als der Durchmesser des Kabels 1 mit Isolierung 5. Gegebenenfalls kann es auch sein, dass sich die Hülse nur über den Litzenleiter 4 im Bereich L schieben lässt, der Durchmesser aber kleiner ist als der Durchmesser des Kabels 1 im Bereich der Isolierung 5. Die Hülse 3 ist dünnwandig gestaltet und weist vorzugsweise eine Stärke zwischen 0,1 mm und 0,5 mm auf. Die Hülse 3 ist vorzugsweise aus Metall, insbesondere Kupfer oder Aluminium oder einer Legierung eines dieser Metalle, gebildet. Die Hülse kann zudem auf ihrer Oberfläche eine metallische Beschichtung, wie z.B. Silber, aufweisen.

Der Stift 6 ist aus Metall gebildet und weist vorzugsweise eine Härte auf, die nicht geringer ist als die Härte der Einzeldrähte des Litzenleiters 4. Vorzugsweise kommt ein Metall, insbesondere Kupfer oder Aluminium oder eine Legierung eines dieser Metalle, zum Einsatz. Weiterhin kann der Stift 6 auch eine metallische Beschichtung, wie z.B. Silber, aufweisen. Bei einer einstückigen Ausgestaltung ist das Kontaktteil aus dem gleichen Werkstoff gebildet. Andererseits ist es auch denkbar unterschiedliche Werkstoffe für den Stift 6 und das Kontaktteil 7 zu verwenden und diese durch einen beliebigen Verbindungsprozess stoffschlüssig, kraftschlüssig und/oder formschlüssig miteinander zu verbinden.

Im Folgenden wird unter Bezugnahme auf die Figuren 1 bis 3 das erfindungsgemäße Verfahren gemäß einer Ausführungsform erläutert.

Wie es in Figur 1 dargestellt ist, wird zunächst das Kabel 1 im Bereich L vollständig abisoliert. Dies kann, wie erwähnt, entgegen des Dralls des Litzenleiters 4 erfolgen.

Anschließend wird auf das so vorbereitete Kabel 1 die Hülse 3 aufgeschoben.

Der Stift 6 wird daraufhin zusammen mit dem Kontaktteil 7 in das abisolierte Ende des Kabels 1 zwischen die Einzeldrähte des Litzenleiters 4 eingeschoben. Dabei wird der Litzenleiter 4 in der Mitte zerteilt, wobei sich idealerweise die Einzeldrähte gleichmäßig über den Umfang des Stifts 6 verteilen. Alternativ ist es auch denkbar, zunächst einen Dorn zwischen die Einzeldrähte des Litzenleiters 4 einzuschieben, um den Litzenleiter in der Mitte zu teilen und einen Raum für das stiftförmige Element 6 zu schaffen, wie es zuvor genauer erläutert wurde. Damit die Einzeldrähte des Litzenleiters 4 gleichmäßig ausweichen, kann es vorteilhaft sein, das Litzenleiterende L in einem Werkzeug aufzunehmen, das diesen vollumfänglich umgibt. Dieses Werkzeug kann aus zwei Werkzeughälften gestaltet sein. Dieses Werkzeug gibt den maximalen Umfang des Litzenleiters 4 nach dem Zerteilen vor und ermöglicht bei einem zentralen Einbringen des Stifts 6 das Ausweichen der Einzeldrähte des Litzenleiters 4 nur so, dass der Stift 6 am Ende zentral im Litzenleiter 4 liegt. Dies ist jedoch nur dann möglich, wenn eine gerade Anzahl an Einzeldrähten vorhanden ist. Bei einer ungeraden Anzahl wird der zentral positionierte Einzeldraht des Litzenleiters in eine beliebige radiale Richtung ausweichen. Dieser geringfügige Versatz zur zentralen Anordnung hat jedoch keinen erheblichen negativen Einfluss auf das Verbindungsergebnis und fällt unter die Begrifflichkeit einer zentralen Anordnung. Nach dem Einbringen ist der Stift 6 im Wesentlichen fluchtend zur Mittelachse des Kabels 1 ausgerichtet. Das Einbringen des Stifts 6 in den Litzenleiter 4 ist in Figur 2 schematisch durch den Pfeil A angedeutet.

Anschließend wird die Hülse 3, wie es durch den Pfeil B in Figur 2 angedeutet ist, über die frei liegende Länge L des Litzenleiters 4 oder zumindest einen Teil davon geschoben. In diesem Zustand umgibt die Hülse 3 einen Teil der Länge L des Litzenleiters 4 vollumfänglich sowie einen Teil des Stifts 6. Mit anderen Worten ist die Hülse 3 zumindest so angeordnet, dass sie in einem Teilbereich sowohl den Litzenleiter 4 als auch den Stift 6 umgibt.

In einem nächsten Verfahrensschritt, wie er in Figur 3 durch die Pfeile C angedeutet ist, wird die Hülse durch ein Magnetimpulsschweißverfahren, wie es in der WO 2008/104668 A1 offenbart ist, mit dem Litzenleiter 4 stoffschlüssig verbunden. Dazu wird in die Hülse über ein Magnetfeld ein Strom induziert, der ein dem äußeren Magnetfeld entgegen gerichtetes Magnetfeld erzeugt. Durch die dadurch resultierenden Abstoßungskräfte wird die Hülse innerhalb von Mikrosekunden beschleunigt zusammengepresst und trifft mit hoher Geschwindigkeit auf die äußeren Litzendrähte auf. Die beim Aufprall schlagartig frei werdende Energie bricht vorhandene Oxidschichten auf und führt zu einer Kaltverschweißung der Metalloberflächen. Bei diesem Vorgang wird die radial innen liegende Seite der Hülse 3 mit den mit dieser Innenseite in Kontakt stehenden Einzeldrähten des Litzenleiters 4 kaltverschweißt. Gleiches gilt für die miteinander in Kontakt stehenden Einzeldrähte des Litzenleiters 4 sowie die Einzeldrähte des Litzenleiters, die mit dem Stift 6 in Kontakt stehen. Durch den Impuls erfolgt zudem eine plastische Verformung insbesondere der Litzendrähte, wodurch zuvor existierende Hohlräume im Litzenleiter beseitigt werden. Maßgeblich für die optimale, stoffschlüssige Kontaktierung, die über das bloße Verpressen der Litze hinaus geht, ist jedoch, dass ein maximaler Impulsübertrag zwischen den Fügepartnern stattfindet. Eben dies stellt das entsprechend dimensionierte Widerlager im Zentrum sicher, ohne welches die durch den Impuls ins Zentrum übertragene Energie allenfalls nur noch zum Verformen der darin befindlichen Einzeldrähte, nicht aber zu deren Kaltverschweißung ausreichen würde. Insbesondere bei Aluminiumlitzen ist eine vollständige Kaltverschweißung wiederum entscheidend für einen optimalen Leitwert der elektrischen Verbindung, da aufgrund der natürlichen Qxidschicht auf den Einzeldrähten des Litzenleiters keine oder nur eine stark verminderte elektrische Leitung quer zum Leiterquerschnitt erfolgt.
Anschließend ist eine elektrische Kontaktierung des Litzenleiters 4 mit dem Kontaktelement 7 über den Stift 6 hergestellt. Dieses Verfahren ermöglicht im Gegensatz zum Ultraschallschweißen auch bei großen Leitungsquerschnitten über 60 mm² hohe mechanische Festigkeit und gleichbleibend geringe Übergangswiderstände. Darüber hinaus kann eine gleichmäßigere Kaltverschweißung in Radialrichtung als in einem Verfahren erzielt werden, bei dem kein Stift 6 zum Einsatz kommt, sondern nur die Hülse 3 mit dem Kontaktteil 7 verbunden ist, was zu einer leitfähigeren, mechanisch stabileren und damit auch zuverlässigeren und langlebigeren Kontaktierung führt. Darüber hinaus kann das Verfahren sowohl bei Aluminiumlitzen als auch Kupferlitzen oder Litzen mit anderen Materialien zum Einsatz kommen, ohne dass Verfahren oder Kontaktelementgeometrien verändert werden müssen. Lediglich könnte es gegebenenfalls erforderlich sein die Hülsengröße der Hülse 3, d. h. deren Durchmesser an den entsprechenden Leitungsquerschnitt anzupassen.

Dementsprechend liefert die vorliegende Erfindung ein Verfahren mit einer kurzen Prozessdauer, zuverlässigem Kontaktergebnis und flexibler Einsatzmöglichkeit. Ferner wird ein konfektioniertes Kabel geschaffen, das eine zuverlässigere Kontaktierung als im bekannten Stand der Technik aufweist und kostengünstig herstellbar ist. Es versteht sich jedoch, dass die vorliegende Erfindung auch anderweitig als oben in Bezug auf die bevorzugte Ausführungsform beschrieben, umgesetzt werden kann, wie es eingangs erwähnt wurde. Die vorliegende Erfindung ist folglich in den folgenden Patentansprüchen definiert.

## Patentansprüche

1. Verfahren zur Kabelkonfektionierung umfassend die Schritte:
Positionieren einer Hülse (3) um den Außenumfang frei liegender Einzeldrähte eines Litzenleiters (4);
Verpressen der Hülse durch einen Pressschweißvorgang, insbesondere einen Magnetimpulsschweißvorgang,
**gekennzeichnet durch** Einbringen wenigstens eines Widerlagers (6) am Ende eines Kabels (1) zwischen die frei liegenden Einzeldrähte des Litzenleiters (4) des Kabels, wobei die Hülse (3) so positioniert ist, dass die Hülse zumindest eine Teillänge (L) des frei liegenden Litzenleiters (4) und des Widerlagers (6) umgibt, und durch den Pressschweißvorgang die Innenseite der Hülse (3) mit den damit in Kontakt stehenden Einzeldrähten des Litzenleiters (4), die miteinander in Kontakt stehenden Einzeldrähte des Litzenleiters (4) untereinander und die mit dem Widerlager (6) in Kontakt stehenden Einzeldrähte des Litzenleiters (4) mit dem Widerlager kaltverschweißt werden, wodurch ein Kontaktteil (7), das mit der Hülse (3) und/oder dem Widerlager (6) verbunden ist, mit dem Litzenleiter (4) elektrisch verbunden wird.

2. Verfahren nach Anspruch 1, bei dem das Widerlager (6) im Wesentlichen zentral zwischen die Einzeldrähte des Litzenleiters (4) eingebracht wird.

3. Verfahren nach einem der vorstehenden Ansprüche, bei dem das Kabel (1) an einem Ende abisoliert wird, um den Litzenleiter (4) frei zu legen, wobei die Einzeldrähte des Litzenleiters (4) des Kabels verdrillt sind und der Litzenleiter gegen den Drall abisoliert wird.

4. Konfektioniertes Kabel, umfassend wenigstens eine Ader mit einem Litzenleiter, eine auf den Außenumfang des Litzenleiters gepresste Hülse (3) und ein Kontaktteil (7),
**gekennzeichnet durch** wenigstens ein zwischen Einzeldrähten des Litzenleiters (4) angeordnetes Widerlager (6) und **dadurch, dass** das Kontaktteil (7) mit der Hülse (3) und/oder dem Widerlager (6) verbunden, vorzugsweise einstückig ausgebildet ist und somit mit dem Litzenleiter (4) in elektrischem Kontakt steht, wobei die Innenseite der Hülse (3) mit den damit in Kontakt stehenden Einzeldrähten des Litzenleiters (4), die miteinander in Kontakt stehenden Einzeldrähte des Litzenleiters (4) untereinander und die mit dem Widerlager (6) in Kontakt stehenden Einzeldrähte des Litzenleiters (4) mit dem Widerlager kaltverschweißt sind.

5. Konfektioniertes Kabel nach Anspruch 4, bei dem das Kabel (1) ein Rundleiter mit einer Längsmittelachse ist, und das Widerlager (6) im Wesentlichen mit der Längsmittelachse fluchtet.

6. Konfektioniertes Kabel nach Anspruch 4 oder 5, bei dem die Einzeldrähte des Litzenleiters (4) aus Aluminium oder einer Aluminiumlegierung gebildet ist.

## Claims

1. Method for prefabricating cables, comprising the steps:
positioning a sleeve (3) around the outer circumference of exposed individual wires of a stranded wire conductor (4);
compressing the sleeve by means of a pressure welding operation, in particular a magnetic pulse welding operation;
**characterized by** introducing at least one support (6) at the end of a cable (1) between the exposed individual wires of the stranded wire conductor (4) of the cable, wherein the sleeve (3) is positioned in such a way that the sleeve surrounds at least a partial length (L) of the exposed stranded wire conductor (4) and of the support (6) and, by means of the pressure welding operation, the inner side of the sleeve (3) with the individual wires of the stranded wire conductor (4) that are in contact therewith, the individual wires of the stranded wire conductor (4) that are in contact with one another, and the individual wires of the stranded wire conductor (4) that are in contact with the support (6) are cold-welded, by which means a contact part (7) which is connected to the sleeve (3) and/or the support (6) is connected electrically to the stranded wire conductor (4).

2. Method according to Claim 1, in which the support (6) is introduced substantially centrally between the individual wires of the stranded wire conductor (4) .

3. Method according to one of the preceding claims, in which the cable (1) is stripped at one end in order to expose the stranded wire conductor (4), wherein the individual wires of the stranded wire conductor (4) of the cable are twisted and the stranded wire conductor is stripped counter to the twist.

4. Prefabricated cable comprising at least one core having a stranded wire conductor, a sleeve (3) pressed onto the outer circumference of the stranded wire conductor, and a contact part (7),
**characterized by** at least one support (6) arranged between individual wires of the stranded wire conductor (4), and by the fact that the contact part (7) is connected to the sleeve (3) and/or the support (6), preferably formed in one piece, and is thus in electrical contact with the stranded wire conductor (4), the inner side of the sleeve (3) with the individual wires of the stranded wire conductor (4) that are in contact therewith, the individual wires of the stranded wire conductor (4) that are in contact with one another, and the individual wires of the stranded wire conductor (4) that are in contact with the support (6) are cold-welded to the support.

5. Prefabricated cable according to Claim 4, in which the cable (1) is a round conductor with a longitudinal mid-axis, and the support (6) is substantially aligned with the longitudinal mid-axis.

6. Prefabricated cable according to Claim 4 or 5, in which the individual wires of the stranded wire conductor (4) are made of aluminium or an aluminium alloy.

## Revendications

1. Procédé de confection de câble comprenant les étapes consistant à :
positionner une gaine (3) sur la périphérie externe de fils individuels libres d'un conducteur multibrin (4) ;
presser la gaine par un processus de soudage par pressage, notamment un processus de soudage par impulsion magnétique,
**caractérisé par** le fait d'introduire au moins un contre-appui (6) à l'extrémité d'un câble (1) entre les fils individuels libres du conducteur multibrin (4) du câble, dans lequel la gaine (3) est positionnée de manière à ce que la gaine entoure au moins une longueur partielle (L) du conducteur multibrin (4) libre et du contre-appui (6), et à ce que la face interne de la gaine (3), avec les fils individuels en contact avec celle-ci du conducteur multibrin (4), les fils individuels en contact les uns avec les autres du conducteur multibrin (4) et les fils individuels en contact avec le contre-appui (6) du conducteur multibrin (4), soit soudée à froid au contre-appui, cela conduisant au fait qu'une pièce de contact (7) qui est reliée à la gaine (3) et/ou au contre-appui (6) est électriquement connectée au conducteur multibrin (4).

2. Procédé selon la revendication 1, dans lequel le contre-appui (6) est introduit de manière sensiblement centrale entre les fils individuels du conducteur multibrin (4).

3. Procédé selon l'une des revendications précédentes, dans lequel le câble (1) est dénudé à l'une des ses extrémités afin de libérer le conducteur multibrin (4), dans lequel les fils individuels du conducteur multibrin (4) du câble sont torsadés et le conducteur multibrin est dénudé contre la torsion.

4. Câble confectionné, comprenant au moins une âme comportant un conducteur multibrin, une gaine (3) pressée sur la périphérie externe du conducteur multibrin et une partie de contact (7),
**caractérisé par** au moins un contre-appui (6) disposé entre les fils individuels du conducteur multibrin (4) et en ce que la partie de contact (7) est reliée à la gaine (3) et/ou au contre-appui (6), en ce qu'elle est de préférence réalisée en une seule pièce, et est ainsi en contact électrique avec le conducteur multibrin (4), dans lequel la face interne de la gaine (3), avec les fils individuels en contact avec celle-ci du conducteur multibrin (4), les fils individuels en contact les uns avec les autres du conducteur multibrin (4) et les fils individuels en contact avec le contre-appui (6) du conducteur multibrin (4), est soudée à froid au contre-appui.

5. Câble confectionné selon la revendication 4, dans lequel le câble (1) est un conducteur rond ayant un axe longitudinal central, et le contre-appui (6) est sensiblement aligné avec l'axe central longitudinal.

6. Câble confectionné selon la revendication 4 ou 5, dans lequel les fils individuels du conducteur multibrin (4) sont constitués d'aluminium ou d'un alliage d'aluminium.
